(19) Europäisches Patentamt
European Patent Office
Office européen des brevets

(11) **EP 2 444 871 A1**

(12) **EUROPEAN PATENT APPLICATION**

(43) Date of publication:
**25.04.2012 Bulletin 2012/17**

(51) Int Cl.:
**G05D 1/12** (2006.01)  **B64C 39/02** (2006.01)

(21) Application number: **10251828.9**

(22) Date of filing: **19.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BAE Systems Plc**
**London SW1Y 5AD (GB)**

(72) Inventor: **The designation of the inventor has not yet been filed**

(74) Representative: **Edis, Ronald Malcolm**
**BAE Systems plc**
**Group Intellectual Property Department**
**P.O. Box 87**
**Warwick House**
**Farnborough Aerospace Centre**
**Farnborough**
**Hampshire GU14 6YU (GB)**

(54) **Sensor positioning for target tracking**

(57)    A method and apparatus for determining positioning of a sensor (4) relative to a target (10) being tracked (e.g. in an urban environment) using the sensor (4), the sensor (4) being mounted on a vehicle (2), e.g. an unmanned air vehicle (UAV), and being moveable with respect to the vehicle (2), the method comprising: for a certain time-step, measuring a state of the target (10) using the sensor (4); for the certain time-step, estimating a state of the target (10) using the measurements; determining instructions for movement of the sensor (4) with respect to the vehicle (2), and instructions for the movement of the vehicle (2), using the estimated state; wherein determining movement instructions comprises incorporating knowledge of how sensor line of sight is restricted, sensor line of sight being a path between the sensor (4) and an object being measured using the sensor (4).

**FIG. 2**

**Description**

FIELD OF THE INVENTION

The present invention relates to determining of positioning of sensors, and to positioning of sensors, in particular sensors used in target tracking processes.

BACKGROUND

Target tracking typically comprises performing intermittent measurements of a state of a target (for example a vector including a target's position and velocity) and estimating present and/or future states of the target.
Sensors are typically used to perform target state measurements.
In certain situations, a target being tracked using a sensor may move into positions in which the target is partially or wholly obscured from the sensor. For example, a land-based vehicle being tracked in an urban environment using a sensor mounted on an aircraft may move behind a building such that it is hidden from the sensor.
Conventional target tracking algorithms tend to encounter problems when implemented in situations in which a path between a sensor and a target, i.e. a line of sight of the sensor, may become obstructed.

SUMMARY OF THE INVENTION

In a first aspect, the present invention provides a method of determining positioning of a sensor relative to a target being tracked using the sensor, the sensor being mounted on a vehicle, and the sensor being moveable with respect to the vehicle, the method comprising: for a certain time-step, measuring a state of the target using the sensor; for the certain time-step, estimating a state of the target using the measured target state; determining instructions for movement of the sensor with respect to the vehicle using the estimated state; and determining instructions for the movement of the vehicle using the estimated state; wherein a step of determining movement instructions comprises incorporating knowledge of how a line of sight of the sensor is restricted, the line of sight of the sensor being a path between the sensor and an object being measured using the sensor.
The target being tracked may be in an urban environment.
A step of determining movement instructions may comprise minimising an average error in the estimated target state.
A step of determining movement instructions may comprise determining movement instructions that minimise a loss function that corresponds to an expected total future loss that will be incurred by performing those movement instructions.
The loss function may be an uncertainty in a filtered probability distribution of the target state given a series of measurements of the target state.
The uncertainty may be defined as the Shannon entropy.
The loss function may be defined by the following equation:

$$L(b^k) = -\underset{x^k}{E}\{\log b^k(x^k)\}$$

where:

$L(b^k)$ is the loss function;
$E(A)$ is an expected value of A;
$b^k(x^k) := p(x^k| z^1, z^2,..., z^k$ is a belief state, defined by the filtered probability distribution of the target state $x^k$ given a series of measurements of the target state; and
$z^i$ is a measurement of the target state at an $i$th time-step.

The loss function may be defined by the following equation:

$$L(b^k, y^k, u^{k+1}, z^{k+1}) = \Pr(z^{k+1} = MissDetection \mid b^k, y^k, u^{k+1})$$

where:

$y^k$ is an overall state of the vehicle and the sensor at time k.

$u^{k+1}$ is a combined movement instruction for the vehicle and the sensor for time $k+1$.

$b^k (x^k) := p(x^k \mid z^1, z^2, ..., z^k)$ is a belief state, defined by the filtered probability distribution of the target state $x^k$ given a series of measurements of the target state;

$z^i$ is a measurement of the target state at an $i$th time-step; and

$z^{k+1} = MissDetection$ is an event of the target not being detected at the k+1 time-step.

A step of determining movement instructions may comprise solving the following optimisation problem:

$$[u^k, ..., u^{k+H-1}] = \arg\min_{\substack{u^k, ..., u^{k+H-1} \\ x^{k+1}, ..., x^{k+H} \\ z^{k+1}, ..., z^{k+H}}} E \left\{ \sum_{l=k}^{k+H-1} L(b^l, y^l, u^l, z^{l+1}) + T(b^{k+H}, y^{k+H}) \right\}$$

where:

$u^i$ is a combined movement instruction for the vehicle and the sensor for time $i$;

$y^i$ s an overall state of the vehicle and the sensor at time $i$;

$b^k(x^k) := p(x^k \mid z^1, z^2, ..., z^k)$ is a belief state, defined by the filtered probability distribution of the target state $x^k$ given a series of measurements of the target state;

$z^i$ is a measurement of the target state at an $i$th time-step;

H is a length of a planning horizon;

E(A) is an expected value of A;

$$\sum_{l=k+1}^{k+H} L(\bullet)$$

is a value of a total loss over the time horizon; and

$T(b^{k+H}, y^{k+H})$ approximates a future loss not accounted for within the finite planning horizon H.

The expectation $E(\cdot)$ over possible future observations and positions of the target may be determined by sampling target state and observation sequences for a given set of control commands, and averaging the results over multiple Monte Carlo runs.

The step of determining instructions for movement of the sensor may comprise determining a function of: the instructions for the movement of the vehicle; the estimated state of the target for the certain time-step; and a state of the vehicle for the certain time-step.

In a further aspect, the present invention provides apparatus for determining positioning of a sensor relative to a target being tracked using the sensor, the sensor being mounted on a vehicle, and the sensor being moveable with respect to the vehicle, the apparatus comprising a processor, wherein the processor is arranged to: for a certain time-step, measure a state of the target using the sensor; for the certain time-step, estimate a state of the target using the measured target state; determine instructions for movement of the sensor with respect to the vehicle using the estimated state; and determine instructions for the movement of the vehicle using the estimated state; wherein a step of determining movement instructions comprises incorporating knowledge of how a line of sight of the sensor is restricted, the line of sight of the sensor being a path between the sensor and an object being measured using the sensor.

In a further aspect, the present invention provides a vehicle comprising the apparatus of the above aspect and a sensor.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the above aspect.

BRIEF DESCRIPTION OF THE DRAWINGS

Figure 1 is a schematic illustration (not to scale) of an example of an unmanned air vehicle (UAV) that may be used in the implementation of an embodiment of a sensor positioning process;

Figure 2 is a schematic illustration (not to scale) of an example target tracking scenario in which the UAV may be implemented; and

Figure 3 is a process flow chart showing certain steps of an embodiment of a sensor positioning process.

DETAILED DESCRIPTION

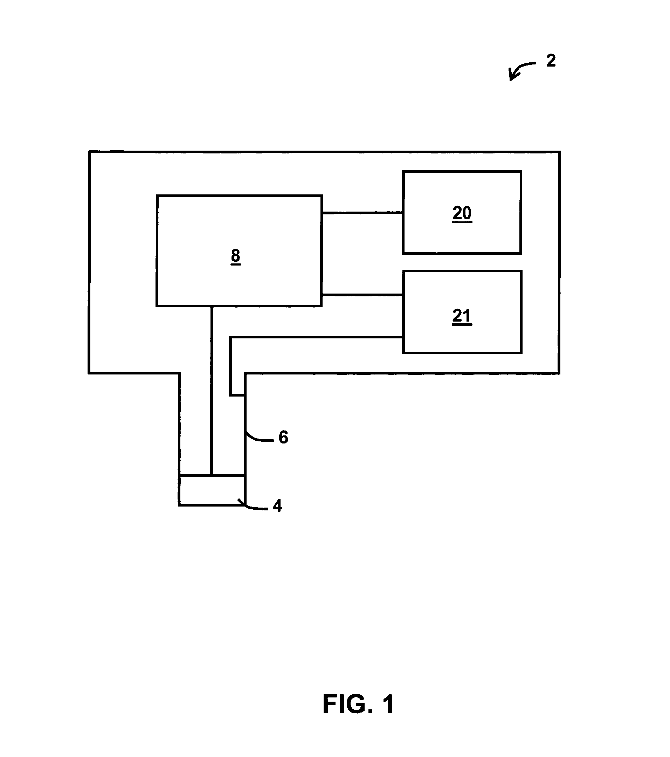

Figure 1 is a schematic illustration (not to scale) of an example of an unmanned air vehicle (UAV) 2 that may be used to implement an embodiment of a "sensor positioning process". In this embodiment, the sensor positioning process is a process of positioning a sensor 4 mounted on the UAV 2 relative to a target such that uncertainty in an estimate of the state (e.g. position and velocity) of a target is reduced or minimised.

The UAV 2 comprises the sensor 4 mounted on a gimbal 6, a processor 8, a UAV control unit 20, and a gimbal control unit 21.

In this embodiment, the sensor 4 is capable of measuring a state (for example a position and a velocity) of a target being tracked. In this embodiment, the sensor 4 produces bearing and/or range information from the UAV 2 to a target. The sensor 4 may, for example, be one or more acoustic arrays and/or electro-optical (EO) devices. In other embodiments, this sensor may measure other parameters related to a target, for example acceleration.

In this embodiment, the gimbal 6 upon which the sensor is mounted allows movement of the sensor 4 relative to the rest of the UAV 2.

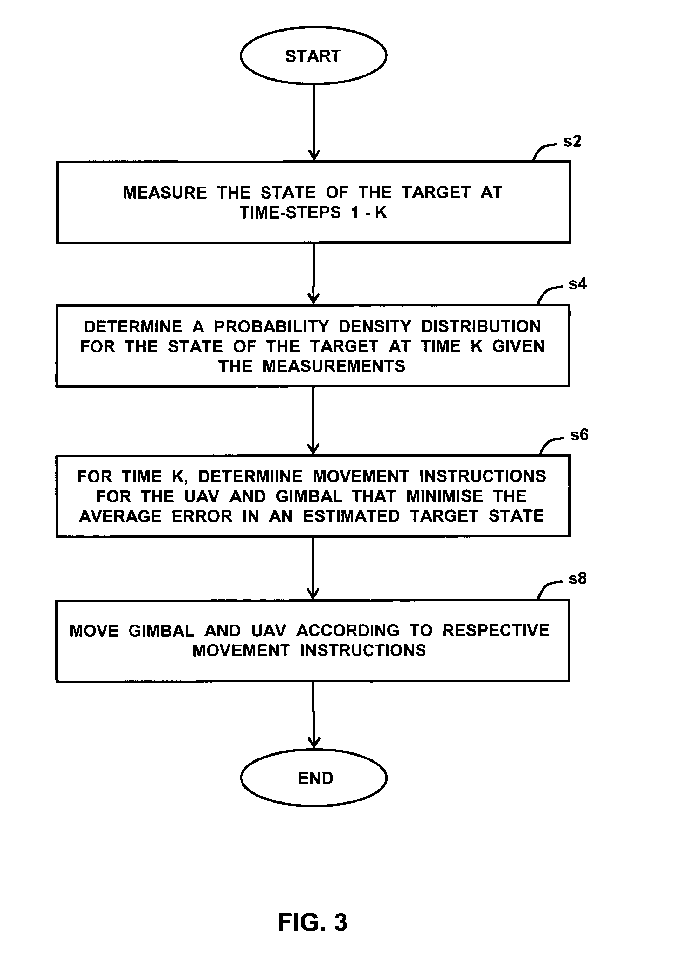

In this embodiment, the processor 8 receives measurements taken by the sensor 4. The processor utilises these measurements to perform a sensor positioning process, as described in more detail later below with reference to Figure 3. The output of the sensor positioning process is a movement instruction for the UAV 2, and a movement instruction for the gimbal 6. In this embodiment, the movement instruction for the UAV 2 is sent from the processor 8 to the UAV control unit 20. Also, the movement instruction for the gimbal 6 is sent from the processor 8 to the gimbal control unit 21.

In this embodiment, the UAV control unit 20 moves the UAV 2 according to the received movement instruction for the UAV 2.

In this embodiment, the gimbal control unit 21 moves the gimbal 6 (and thereby the sensor 4 mounted on the gimbal 6) according to the received movement instruction for the gimbal 6.

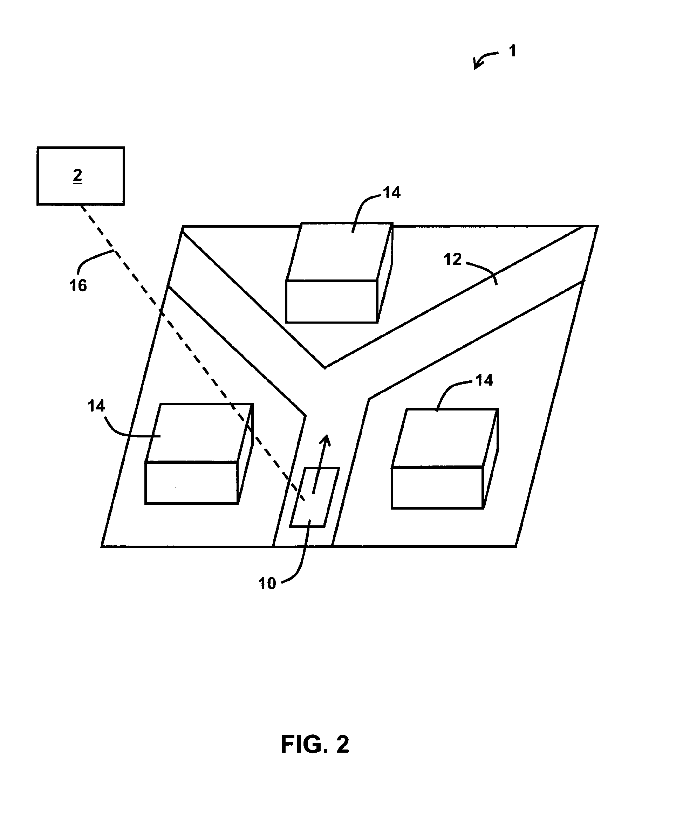

Figure 2 is a schematic illustration (not to scale) of an example target tracking scenario 1 in which the UAV 2 may be operated.

In the scenario 1, the UAV 2 is used to track a single target 10 (which in this embodiment is a land-based vehicle) as it travels along a road 12. The road 12 passes between a plurality of buildings 14.

In Figure 2, a line of sight between the UAV 2 and the target 10 (i.e. an unobstructed path between the sensor 4 and the target 10) is shown as a dotted line and indicated by the reference numeral 16.

In the scenario 1, as the target 10 travels along the road 12, the buildings 14 may block or restrict the line of sight 16.

Apparatus, including the processor 8, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Moreover, in this embodiment the processor 8 is onboard the UAV 2. However, in other embodiments the same functionality is provided by one or more processors, any number of which may be remote from the UAV 2.

An embodiment of a sensor positioning process will now be described. The sensor positioning process advantageously tends to generate instructions for positioning the sensor 4 and/or the UAV 2 such that uncertainty in an estimate of the state of the target 10 (by the UAV 2) is reduced or minimised.

Figure 3 is a process flow chart showing certain steps of an embodiment of a sensor positioning process. The process shown in Figure 3 is for determining instructions for moving the sensor 4 and/or UAV 2 at a kth time-step. In practice, this process may be performed for each of a series of time-steps to determine a series of such movement instructions using observations/measurements of the target 10 as they are acquired.

At steps s2, using the sensor 4, observations of the target 10 by the UAV 2 are taken at each time-step up to and including the kth time-step.

In other words, the following measurements of the target are taken:

$$z^1, z^2, ..., z^k$$

where $z^i$ is an observation of the state of the target 10 at the $i$th time-step. In this embodiment each of these observations is not only dependent on the state of the target 10, but is also dependent on the state of the UAV 2 and sensor 4 at the time the observation.

At step s4, a probability distribution for the state of the target 10 at the kth time-step is estimated using the measurements taken at step s2.

In other words, the following probability distribution is estimated:

$$p(x^k \mid z^1, z^2, ..., z^k)$$

where: $x^k \in X^k$;

$x^k$ is a state of the target 10 at time k; and

$X^k$ is the set of all possible target states at time k.

In this embodiment, the probability distribution estimated at step s4 is estimated using a conventional filter implementation, e.g. a conventional Monte Carlo (particle) filtering algorithm such as that found in "Information-theoretic tracking control based on particle filter estimate", A. Ryan, Guidance, Navigation and Control Conference, 2008 which is incorporated herein by reference.

At step s6, sensing actions, i.e. movement instructions, for the UAV 2 and gimbal 6 are determined by minimising an objective function that corresponds to an expected total future loss that will be incurred by undertaking a given action.

The following definitions are useful in the understanding of the objective function used in this embodiment:

$y^k_{UAV}$ is a state of the UAV 2 at time k. The state of the UAV 2 may include, for example, values for parameters such as position, altitude, roll, pitch, and/or yaw.

$y^k_g$ is a state of the gimbal 6 at time k. The state of the gimbal 6 may include, for example, values for parameters such as the pitch and/or yaw of the gimbal 6 relative to the rest of the UAV 2.

$y^k := [y^k_{UAV}, y^k_g]$ is overall state of the UAV 2 (including the gimbal 6) at time k.

$u^k_{UAV}$ is a control input for the UAV 2 generated by the processor 8 at time $k$. In other words, $u^k_{UAV}$ is a movement instruction for the UAV 2 at time k. This may, for example, comprise values for the parameters "turn rate" and "turn direction" for the UAV 2.

$u_g^{\cdot}$ is a control input for the gimbal 6 generated by the processor 8 at time k. In other words, $u_g^{\cdot\cdot}$ is a movement instruction for the gimbal 6 at time k. This may, for example, comprise a direct specification of the state of the gimbal 6 at the next time-step, i.e. a value for $y_g^{k+1}$.

$u^k := [u_{UAV}^k, u_g^k]$ is a combined instruction for the gimbal 6 and the rest of the UAV 2 at time k.

$b^k (x^k) := p(x^k \mid z^1, z^2,...,z^k \mid z^1,z^2,...,z^k)$ is a belief state, defined by the filtered probability distribution of the target state given the history of observations.

In this embodiment, a loss function that is incurred at a given time step k is defined as the entropy of the posterior probability distribution over the state of the target

$$L(b^k, y^k, u^{k+1}, z^{k+1}) = - \underset{x^{k+1}}{E} \{\log b^{k+1}(x^{k+1})\}$$

In different embodiments the following approach can be combined with a simpler loss function, for instance a loss function defined by the probability of not detecting the target, i.e.

$$L(b^k, y^k, u^{k+1}, z^{k+1}) = \Pr(z^{k+1} = MissDetection \mid b^k, y^k, u^{k+1})$$

where:

$y^k$ is an overall state of the vehicle and the sensor at time k.
$u^{k+1}$ is a combined movement instruction for the vehicle and the sensor for time $k+1$.
$b^k (x^k) := p(x^k \mid z^1, z^2,..., z^k)$ is a belief state, defined by the filtered probability distribution of the target state $x^k$ given a series of measurements of the target state;
$z^i$ is a measurement of the target state at an $i$th time-step; and
$z^{k+1} = MissDetection$ is an event of the target not being detected at the k+1 time-step.

This modified objective function tends to be computationally simpler to compute. It tends not to require the uncertainty in the target estimate to be calculated. This tends to be advantageous for sensors for which each detection observation of the target state has a similar level of error, such that each observation has approximately the same information content regarding the state of the target (i.e. the state observation error is not dependent on the separation, viewing angle, etc. for example a EO sensor with an automatic zoom).

In this embodiment the UAV and gimbal instructions are determined by solving the following optimisation problem

$$[u^k,...,u^{k+H-1}] = f(b^k, y^k)$$

$$= \underset{u^k,...,u^{k+H-1}}{\arg\min} \underset{\substack{x^{k+1},...,x^{k+H} \\ z^{k+1},...,z^{k+H}}}{E} \left\{ \sum_{l=k}^{k+H-1} L(b^l, y^l, u^l, z^{l+1}) + T(b^{k+H}, y^{k+H}) \right\}$$

where:

$y^{k+1} = M (y^k, u^k)$ is a model of the vehicle and gimbal dynamics;
$b^{k+1} = EST(b^k, y^k, u^{k+1}, z^{k+1})$ is the target state estimation equations (as defined by Ryan 2008, or a similar approach;

H is the length of a planning horizon, i.e. a number of time-steps (e.g. seconds) over which the above equation is calculated;

$$\sum_{l=k+1}^{k+H} L(\bullet)$$

is a value of a total loss over the time horizon; and

$T(b^{k+H}, y^{k+H})$ approximates the future losses not accounted for within the finite planning horizon H. This is calculated using an appropriate heuristic, e.g. distance UAV is from the mean of the future target location.

The above objective function includes an expectation $E(\cdot)$ over possible future observations and positions of the target. In this embodiment this expectation is determined by sampling target state and observation sequences for a given set of control commands, and averaging the results over multiple Monte Carlo runs.

In an example model for generating the future observations used, an estimate of the target state is simplified by collapsing the target state onto a centreline of the road 12. Obstructions on the side of the road 12, which could impair line of sight to the target between the UAV 2 and the target 10 (e.g. buildings 14), are modelled as "fences" defined at a given distance from the road centreline with an appropriate height. This enables the probability of detection to be calculated, which in this embodiment is equal to the proportion of the road 12 that is visible to the sensor 6 in a direction perpendicular to the centreline of the road. A simulated future observation is then generated by applying a random error defined by the accuracy of the particular sensor used. Thus, samples are generated and the expectations are determined. This allows the corresponding control commands to be determined.

The above model of generating future observations tends to be an advantageously computationally efficient method. The method models probable observations for a given future configuration of the UAV 2, gimbal 6 and target state. This model advantageously tends to incorporate knowledge of the environment and how external objects (e.g. buildings 14) effect these observations. Moreover, the model tends to balance model accuracy against the computational resources required to reason over the model.

In a further embodiment, additional feedback is incorporated into the planning process which generates the control commands. In this further embodiment, the UAV commands are separated from those of the gimbal 6 in a hierarchical fashion. In such an embodiment the gimbal commands can be slaved to the current distribution of the state of the target. In other words, the gimbal commands can be determined using a function of an estimated state of the target, and an estimated future state of the UAV 2, i.e. the gimbal commands for positioning the sensor 4 with respect to the UAV 2 may be a function of a state of the UAV at a certain time-step, the instructions for the movement of the UAV 2 for that time-step(the UAV commands), and the estimated state of the target (e.g. for that time-step). For example, the gimbal 6 may point in a direction that maximises the chance of generating a detection observation, or simply point at the mean (average state) or mode (most likely state) of the distribution. This controller effectively defines a new dynamical model for the gimbal 6 that is dependent only on the current belief over the state of the target 10 and the current state of the UAV 2. With this low level controller defined, the processor 8 (using the process described above with reference to Figure 3) tends to be able to provide movement instructions for the UAV 2 by optimising over the path of the UAV 2 by considering the gimbal controller as a black box. In other words, the processor 8 tends to be able to minimise the expected loss given where the gimbal 6 will point over a planned trajectory and a predicted belief for the location of the target. This not only tends to improve performance by incorporating additional feedback into the system, but also tends to reduce the computational resources used to optimise over the set of all vehicle and gimbal commands.

At step s8, the gimbal 6 and the UAV 2 are moved according to the movement instructions determined at step s6. In this embodiment, the movement instruction for the gimbal 6 is sent from the processor 8 to the gimbal control unit 21, which moves the gimbal 6 (and hence the gimbal-mounted sensor 4) according to the received instruction. Also, the movement instruction for the rest of the UAV 2 is sent from the processor 8 to the UAV control unit 20, which moves the UAV 2 to a new position according to the received instruction.

Thus, a process of positioning a sensor 4 is provided. The sensor 4 is positioned 4 by moving the gimbal 6 upon which the sensor 4 is mounted relative to the UAV 2, and by moving the UAV 2 relative to target 10. The gimbal 6 and UAV 2 are moved according to a first movement instruction in a series of movement instructions generated by the processor 8 after performing the process described above.

An advantage of employing the above described process is provided by the inclusion of the term $T(\cdot)$. This term $T(\cdot)$ tends to provide that the instructions generated for the control units 20, 21 are more stable than those that would be generated using conventional methods.

Moreover, the use of the term $T(\cdot)$ advantageously alleviates a problem of the processor 8 getting stuck at local minima when performing the approximation calculation, for example when using relatively short time horizons. The term

$T(\cdot)$ may be defined as the square of the distance between the terminal location of the UAV 2 and the location of a nearest particle contained in a forward prediction of the filter representing the belief over the state of the target 10. This may be advantageously weighted such that it only becomes dominant when the separation becomes greater than the total distance that can be traversed under the defined planning horizon.

A further advantage is that gimballed sensors and/or environmental constraints on the line of sight 16 are taken into account in the generation of movement instructions for the control units 20, 21.

The solution to the above optimisation problem is a series of movement instructions over the entire horizon H. In this embodiment, only the first of this series of instructions is acted upon by the control units 20, 21 to move the gimbal 6 and the rest of the UAV 2. Furthermore, in this embodiment, the approximation calculation is performed periodically to determine later instructions. However, in other embodiments a different number of instructions in the series of instructions may be acted upon by either or both of the control units 20, 21. For example the first two or three instructions in the series of instructions may be acted upon by the control units 20, 21 to move the gimbal 6 and the rest of the UAV 2.

In this embodiment, a small time horizon (for example, H = 1 time-step, e.g. 1 second) is used. The use of small time horizons tends to be advantageously computationally efficient compared to the use of longer time horizons. However, in other embodiments, time horizons of different lengths may be used, for example H = 2, 4, or 8 time-steps.

In a further embodiment, the movement instructions generated for the UAV 2 and received by the UAV control unit 20 are determined separately from the movement instruction for the gimbal 6 using a simpler process (i.e. this embodiment is equivalent to the separation defined above, with "gimbal" replaced by "UAV" and vice versa).

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, a UAV is used in the tracking of a target. However, in other embodiments any appropriate unit, for example a land-based vehicle or a manned vehicle, may be used in the tracking of a target.

In the above embodiments, the sensor is mounted on a gimbal on the UAV. However, in other embodiments, the sensor may be positioned on any appropriate piece of apparatus that is movable with respect to the UAV.

In the above embodiments, a single target is tracked. However, in other embodiments any number of targets may be tracked by one or more UAVs.

In the above embodiments, the target is a land based vehicle. However, in other embodiments the target may be any suitable entity whose state is capable of being measured by the sensor.

In the above embodiments, a sensor produces bearing and/or range information from the UAV to a target. However, in other embodiments a sensor may be any different type of sensor suitable for measuring a state of a target.

In the above embodiments, a single sensor is used to perform state measurements of a target. However, in other embodiments any number of sensors may be used. Moreover, in other embodiments the any number of the sensors may be mounted on any number of different gimbals, for example gimbal positioned at different points on the UAV.

In the above embodiments, the line of sight between a sensor and a target is affected by buildings. However, in other embodiments the line of sight between a sensor and a target may be affected to the same or a different extent by a different factor. For example, line of sight may be only partially restricted by terrain features such as tree canopies, or by environmental conditions (e.g. heavy cloud) in which tracking is being performed. Also, in other embodiments parts of the UAV may restrict a sensor's line of sight, or the gimbal upon which a sensor is mounted may have restricted movement.

In the above embodiments, the loss function $L(b^k)$ is defined as the probability of miss detection or uncertainty. However, in other embodiments a different appropriate loss function is used, e.g. Kullback-Leibler or Renyi divergences between prior and posterior estimates, or a root mean squared error.

In the above embodiments, the UAV and gimbal are controlled automatically via separate control units onboard the UAV. However, in other embodiments the gimbal and/or the rest of the UAV may be controlled in a different manner, for example via an integrated UAV and gimbal controller, or by providing instructions to a human operator.

**Claims**

1. A method of determining positioning of a sensor (4) relative to a target (10) being tracked using the sensor (4), the sensor (4) being mounted on a vehicle (2), and the sensor (4) being moveable with respect to the vehicle (2), the method comprising:

   for a certain time-step, measuring a state of the target (10) using the sensor (4);
   for the certain time-step, estimating a state of the target (10) using the measured target state;

determining instructions for movement of the sensor (4) with respect to the vehicle (2) using the estimated state; and

determining instructions for the movement of the vehicle (2) using the estimated state; wherein a step of determining movement instructions comprises incorporating knowledge of how a line of sight of the sensor (4) is restricted, the line of sight of the sensor (4) being a path between the sensor (4) and an object being measured using the sensor (4).

2. A method according to claim 1, wherein the target (10) is being tracked in an urban environment.

3. A method according to claim 1 or 2, wherein a step of determining movement instructions comprises minimising an average error in the estimated target state.

4. A method according to claim 1, 2 or 3, wherein a step of determining movement instructions comprises determining movement instructions that minimise a loss function that corresponds to an expected total future loss that will be incurred by performing those movement instructions.

5. A method according to claim 4, wherein the loss function is an uncertainty in a filtered probability distribution of the target state given a series of measurements of the target state.

6. A method according to claim 5, wherein the uncertainty is defined as the Shannon entropy.

7. A method according to any of claims 4 to 6, wherein the loss function is defined by the following equation:

$$L(b^k) = -\underset{x^k}{E}\{\log b^k(x^k)\}$$

where:

$L(b^k)$ is the loss function;
$E(A)$ is an expected value of A;
$b^k(x^k) := p(x^k \mid z^1, z^2, ..., z^k)$ is a belief state, defined by the filtered probability distribution of the target state $x^k$ given a series of measurements of the target state; and
$z^i$ is a measurement of the target state at an $i$th time-step.

8. A method according to any of claims 4 to 6, wherein the loss function is defined by the following equation:

$$L(b^k, y^k, u^{k+1}, z^{k+1}) = \Pr(z^{k+1} = MissDetection \mid b^k, y^k, u^{k+1})$$

where:

$y^k$ is an overall state of the vehicle (2) and the sensor (4) at time $k$.
$u^{k+1}$ is a combined movement instruction for the vehicle (2) and the sensor (4) for time k$+1$.
$b^k(x^k) := p(x^k \mid z^1, z^2, ..., z^k)$ is a belief state, defined by the filtered probability distribution of the target state $x^k$ given a series of measurements of the target state;
$z^i$ is a measurement of the target state at an $i$th time-step; and
$z^{k+1} = MissDetection$ is an event of the target (10) not being detected at the k+1 time-step.

9. A method according to any of claims 1 to 8, wherein a step of determining movement instructions comprises solving the following optimisation problem:

$$[u^k,...,u^{k+H-1}] = \arg\min_{\substack{u^k,...,u^{k+H-1} \\ x^{k+1},...,x^{k+H} \\ z^{k+1},...,z^{k+H}}} E \left\{ \sum_{l=k}^{k+H-1} L(b^l, y^l, u^l, z^{l+1}) + T(b^{k+H}, y^{k+H}) \right\}$$

where:

$u^i$ is a combined movement instruction for the vehicle (2) and the sensor (4) for time $i$;
$y^i$ is an overall state of the vehicle (2) and the sensor (4) at time i;
$b^k (x^k) := p(x^k \mid z^1, z^2,..., z^k$s a belief state, defined by the filtered probability distribution of the target state $x^k$ given a series of measurements of the target state;
$z^i$ is a measurement of the target state at an $i$th time-step;
H is a length of a planning horizon;
E(A) is an expected value of A;

$$\sum_{l=k+1}^{k+H} L(\bullet)$$

is a value of a total loss over the time horizon; and
$T(b^{k+H}, y^{k+H})$ approximates a future loss not accounted for within the finite planning horizon H.

**10.** A method according to claim 9, wherein the expectation $E(\cdot)$ over possible future observations and positions of the target (10) is determined by sampling target state and observation sequences for a given set of control commands, and averaging the results over multiple Monte Carlo runs.

**11.** A method according to any of claims 1 to 10 wherein the step of determining instructions for movement of the sensor (4) comprises determining a function of:

the instructions for the movement of the vehicle (2);
the estimated state of the target (10) for the certain time-step; and
a state of the vehicle (2) for the certain time-step.

**12.** Apparatus for determining positioning of a sensor (4) relative to a target (10) being tracked using the sensor (4), the sensor being mounted on a vehicle (2), and the sensor (4) being moveable with respect to the vehicle (2), the apparatus comprising a processor (8), wherein the processor (8) is arranged to:

for a certain time-step, measure a state of the target (10) using the sensor (4);
for the certain time-step, estimate a state of the target (10) using the measured target state;
determine instructions for movement of the sensor (4) with respect to the vehicle (2) using the estimated state; and
determine instructions for the movement of the vehicle (2) using the estimated state; wherein
a step of determining movement instructions comprises incorporating knowledge of how a line of sight of the sensor (4) is restricted, the line of sight of the sensor (4) being a path between the sensor and an object being measured using the sensor (4).

**13.** A vehicle comprising the apparatus of claim 12 and the sensor (4).

**14.** A program or plurality of programs arranged such that when executed by a computer system or one or more processors it/they cause the computer system or the one or more processors to operate in accordance with the method of any of claims 1 to 10.

**15.** A machine readable storage medium storing a program or at least one of the plurality of programs according to claim 11.

FIG. 1

**FIG. 2**

START

s2

MEASURE THE STATE OF THE TARGET AT
TIME-STEPS 1 - K

s4

DETERMINE A PROBABILITY DENSITY DISTRIBUTION
FOR THE STATE OF THE TARGET AT TIME K GIVEN
THE MEASUREMENTS

s6

FOR TIME K, DETERMIINE MOVEMENT INSTRUCTIONS
FOR THE UAV AND GIMBAL THAT MINIMISE THE
AVERAGE ERROR IN AN ESTIMATED TARGET STATE

s8

MOVE GIMBAL AND UAV ACCORDING TO RESPECTIVE
MOVEMENT INSTRUCTIONS

END

FIG. 3

| | Europäisches Patentamt European Patent Office Office européen des brevets | **EUROPEAN SEARCH REPORT** | Application Number EP 10 25 1828 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/017046 A1 (CHEUNG CAROL CARLIN [US] ET AL) 21 January 2010 (2010-01-21) * paragraphs [0002], [0030], [0 35] - [0046] * ----- | 1-5, 11-15 | INV. G05D1/12 B64C39/02 |
| X | Allison Denise Ryan: "Information-Theoretic Control for Mobile Sensor Teams", , 2008, XP002634059, Retrieved from the Internet: URL:http://vehicle.me.berkeley.edu/Publications/AVC/aryan_phdthesis.pdf [retrieved on 2011-04-20] * abstract * * sections 1.2, 2.2, 3, 4 and 6 * ----- | 1-15 | |
| X | US 2010/042269 A1 (KOKKEBY KRISTEN L [US] ET AL) 18 February 2010 (2010-02-18) * the whole document * ----- | 1-5, 11-15 | |
| X | M. ULVKLO ET AL: "A sensor management framework for autonomous UAV surveillance", SPIE, PO BOX 10 BELLINGHAM WA 98227-0010 USA, 2005, XP040203913, * abstract * * sections 1 and 2 * ----- | 1-7, 11-15 | **TECHNICAL FIELDS SEARCHED (IPC)** G05D B64C |

-/--

The present search report has been drawn up for all claims

| Place of search | Date of completion of the search | Examiner |
|---|---|---|
| Munich | 26 April 2011 | Schriefl, Josef |

EPO FORM 1503 03.82 (P04C01)

Europäisches
Patentamt

European
Patent Office

Office européen
des brevets

# EUROPEAN SEARCH REPORT

**Application Number**

EP 10 25 1828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MINGFENG ZHANG ET AL: "Vision-based tracking and estimation of ground moving target using unmanned aerial vehicle", AMERICAN CONTROL CONFERENCE (ACC), 2010, IEEE, PISCATAWAY, NJ, USA, 30 June 2010 (2010-06-30), pages 6968-6973, XP031719744, ISBN: 978-1-4244-7426-4 * the whole document * | 1-15 | |
| A | THEODORAKOPOULOS P ET AL: "UAV target tracking using an adversarial iterative prediction", ROBOTICS AND AUTOMATION, 2009. ICRA '09. IEEE INTERNATIONAL CONFERENCE ON, IEEE, PISCATAWAY, NJ, USA, 12 May 2009 (2009-05-12), pages 2866-2871, XP031509566, ISBN: 978-1-4244-2788-8 * the whole document * | 1-15 | |
| A | P. O. ARAMBEL, M. ANTONE: "Markov Chains for the Prediction of Tracking Performance", SPIE, PO BOX 10 BELLINGHAM WA 98227-0010 USA, 2007, pages 1-11, XP040240398, | 1-15 | **TECHNICAL FIELDS SEARCHED (IPC)** |

The present search report has been drawn up for all claims

| Place of search | Date of completion of the search | Examiner |
|---|---|---|
| Munich | 26 April 2011 | Schriefl, Josef |

EPO FORM 1503 03.82 (P04C01)

## ANNEX TO THE EUROPEAN SEARCH REPORT
## ON EUROPEAN PATENT APPLICATION NO.

EP 10 25 1828

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2011

| Patent document cited in search report | Publication date | Patent family member(s) | Publication date |
|---|---|---|---|
| US 2010017046 A1 | 21-01-2010 | NONE | |
| US 2010042269 A1 | 18-02-2010 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Information-theoretic tracking control based on particle filter estimate. **A. RYAN.** Guidance, Navigation and Control Conference. 2008